# DEMANDE DE BREVET EUROPEEN

(11) **EP 1 959 633 A1**
(43) Date de publication de la demande: **20.08.2008**
(21) Numéro de dépôt: 08101555.4
(22) Date de dépôt: 13.02.2008
(51) Int. Cl.: H04L 29/06

(54) **Serveur et client de communication**

(30) Priorité: 14.02.2007 FR 0753242
(71) Demandeur: Alcatel Lucent, 75008 Paris (FR)
(72) Inventeur: Abou-Chakra, Rabih, 95240 Cormeilles en Parisis (FR); Leroy, Jean-François, 29850 Gouesnou (FR); Elleouet, Jérôme, 29870 Lannilis (FR)
(74) Mandataire: Sciaux, Edmond

(57) **Abrégé**

Ce client de communication (CL) comporte des moyens logiciels (LL, IL) pour communiquer avec un serveur de communication (SR) afin d'utiliser une pluralité de sous-systèmes de communication (SS1, SS2, SS3) couplés à ce serveur, sans que ce client soit dédié à des sous-systèmes de communication prédéterminés. Il comporte :
- des éléments ergonomique (SVE) génériques, permettant à un utilisateur d'accéder à des services courants sur la plupart des sous-systèmes de communication,
- et des éléments ergonomique (EVE) génériques, permettant à un utilisateur d'être informé d'évènements qui sont signalés par la plupart des sous-systèmes de communication, ces événements concernant une communication ou une session.

## Description

L'invention concerne un serveur et un client de communication, utilisables dans un système de communication d'entreprise.

Dans un système de communication d'entreprise, un utilisateur peut disposer généralement de plusieurs sous-systèmes de communication fournissant chacun un médium ou plusieurs media de communication (Un réseau public fixe de téléphonie, un réseau privé fixe de téléphonie, un réseau privé de transmission de données, et l'Internet, par exemple), et fournissant chacun des outils pour des services de téléphonie, de vidéo, de messagerie électronique, de messagerie instantanée, etc. Ces différents média de communication et ces différents outils sont présentés à un utilisateur de manière plus ou moins intégrée, sur un ou plusieurs terminaux de cet utilisateur. Le document WO 00/67436, par exemple, décrit un système de messagerie unifiée qui permet à un usager d'accéder à des messagges de natures très diverses (message vocal, fax, courriel) à partir d'un point d'accès, tel qu'un ordinateur personnel. Il ne permet que de consulter en temps différé des messages enregistrés. L'établissement et la réception d'appel téléphonique, l'envois de fax, l'envois de courriels sont faits respectivement par des sous-systèmes de communication classiques, indépendants les uns des autres.

On connaît des logiciels qui permettent d'utiliser différents média en employant un même ordinateur personnel. Par exemple, Google Talk est un logiciel permettant de téléphoner, d'échanger des messages instantanés, d'échanger des messages électroniques classiques (avec des correspondants qui ne sont pas forcément en ligne), et d'envoyer des fichiers.

Dans les entreprises, on connaît des systèmes de téléphonie assistée par ordinateur (dits CTI, Computer Telephony Integration). Par exemple, Microsoft Office Communicator permet à un utilisateur muni d'un ordinateur personnel, de téléphoner, d'échanger des messages instantanés, d'échanger des messages électroniques classiques, et d'envoyer des fichiers. L'ordinateur personnel de chaque utilisateur exécute un logiciel constitué de plusieurs clients collaborant avec une pluralité de serveurs dédiés respectivement aux différents sous-systèmes de communication. Ces clients sont dédiés respectivement aux différents sous-systèmes de communication.

Ces clients connus ont un inconvénient : Il manquent de souplesse quand les sous-systèmes de communication d'une entreprise évoluent. Les sous-systèmes de communication peuvent être achetés à des vendeurs différents, à des dates différentes, au fur et à mesure des besoins d'une entreprise, et des évolutions technologiques. Les différents clients étant dédiés respectivement à des sous-systèmes de communication prédéterminés, il est impossible de modifier un sous-système sans modifier le client qui lui est dédié ; et a fortiori il est impossible de changer un sous-système ou d'en rajouter un, sans ajouter un nouveau client dédié, dans les ordinateurs de tous les utilisateurs. Si le nombre d'utilisateurs est grand, le coût de cette modification est important.

D'autre part, ces sous-systèmes connus manquent de souplesse quand un utilisateur souhaite qu'une session évolue au cours du temps : L'utilisateur peut souhaiter transférer une session courante de la messagerie instantanée à la téléphonie, ou transférer la session courante d'une personne à une autre personne, par exemple. Dans un tel cas, l'utilisateur ne peut agir que dans le cadre des possibilités du sous-système où la session courante a été ouverte.

Le but de l'invention est de remédier à ces manques de souplesse.

L'objet de l'invention est un client de communication comportant des moyens pour communiquer avec un serveur de communication afin d'utiliser une pluralité de sous-systèmes de communication couplés à ce serveur, sans que ce client soit dédié à des sous-systèmes de communication prédéterminés ;
caractérisé en ce qu'il comporte :
- des éléments ergonomique génériques, permettant à un utilisateur d'accéder en temps réel à des services sur lesdits sous-systèmes de communication,
- et des éléments ergonomique génériques, permettant à un utilisateur d'être informé en temps réel d'évènements qui sont signalés par lesdits sous-systèmes de communication, ces événements concernant une communication ou une session.

Le client ainsi caractérisé est un client générique, c'est à dire non dédié à un ou plusieurs systèmes de communication prédéterminés. Il est destiné à être intégré dans le logiciel des terminaux des utilisateurs. Il permet donc à une entreprise d'ajouter un sous-système de communication supplémentaire, ou de remplacer un sous-système de communication, quels que soient les fabricants de ces sous-systèmes de communication, sans avoir à changer ou modifier le logiciel installé sur les terminaux des utilisateurs, grâce au fait que ce client comporte un des éléments ergonomiques génériques qui permettent à un utilisateur :
- d'accéder à des services sur plusieurs desdits sous-systèmes de communication ;
- et d'être informé d'évènements qui sont signalés par plusieurs desdits sous-systèmes de communication.

D'autre part, le client ainsi caractérisé permet d'agir en temps réel sur la session courante grâce au fait que lesdits éléments ergonomiques génériques, permettent à un utilisateur d'accéder en temps réel à des services sur plusieurs desdits sous-systèmes de communication, et permettent à un utilisateur d'être informé en temps réel d'évènements qui sont signalés par plusieurs desdits sous-systèmes de communication.

L'invention a aussi pour objet un serveur de communication comportant des moyens pour collaborer avec au moins un client permettant à un utilisateur de ce client :
- d'accéder à des services fournis par une pluralité de sous-systèmes de communication,
- et d'être informé d'évènements qui sont signalés par cette pluralité de sous-systèmes de communication, ces événements concernant une communication ou une session ;
caractérisé en ce qu'il comporte en outre une pluralités d'interfaces spécifiques respectivement pour cette pluralité de sous-systèmes de communication, ces interfaces comportant des moyens d'adaptation pour faire communiquer en temps réel cette pluralité de sous-systèmes de communication avec un client qui n'est pas dédié à des sous-systèmes de communication prédéterminés.

Le serveur ainsi caractérisé permet d'utiliser, dans les terminaux des utilisateurs, un client générique, c'est à dire non dédié à un ou plusieurs systèmes de communication prédéterminés, parce que ce serveur comporte, pour chaque système de communication, une interface spécifique à ce sous-système, et qui comporte des moyens d'adaptation pour faire communiquer ce sous-systèmes en temps réel avec le client générique. Il permet donc à une entreprise d'ajouter un sous-système de communication supplémentaire, ou de remplacer un sous-système de communication, en ajoutant ou en remplaçant seulement une interface dans le serveur, sans avoir à changer ou modifier le logiciel installé sur les terminaux de tous les utilisateurs. D'autre part, grâce aux moyens d'adaptation pour faire communiquer un sous-système en temps réel avec un client générique, ce serveur permet à un usager d'agir en temps réel sur la session courante.

L'invention sera mieux comprise et d'autres caractéristiques apparaîtront à l'aide de la description ci-dessous et des figures l'accompagnant :
- La figure 1 représente schématiquement un exemple de réalisation du client selon l'invention, et un exemple de réalisation du serveur selon l'invention.
- La figure 2 représente avec plus de détails cet exemple de réalisation du client selon l'invention.
- La figure 3 représente avec plus de détails cet exemple de réalisation du serveur selon l'invention .

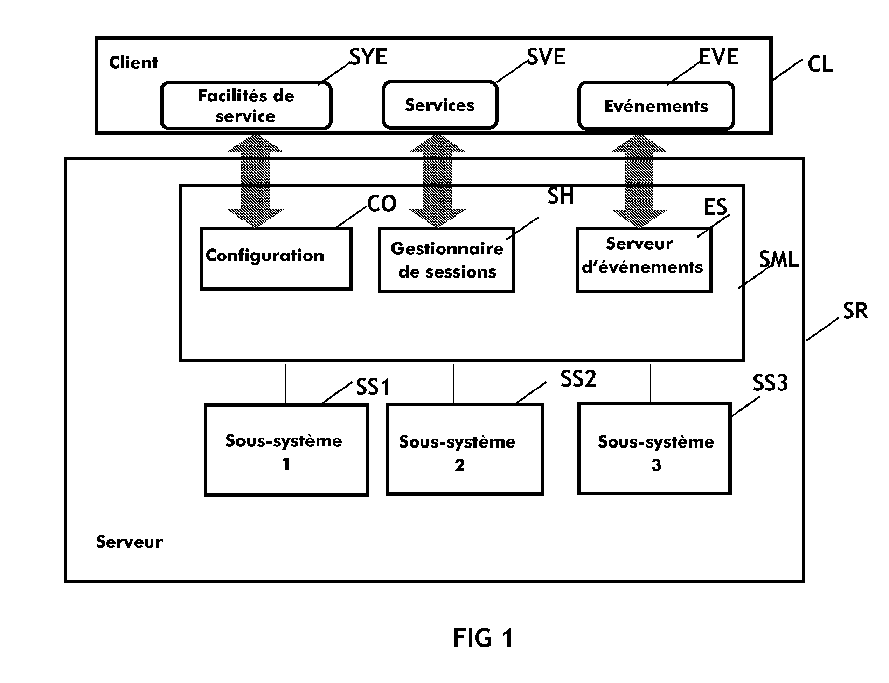

La **figure 1** représente schématiquement un exemple de réalisation CL du client selon l'invention et un exemple de réalisation SR du serveur selon l'invention. Le client CL est exécuté dans un terminal d'utilisateur, par exemple un ordinateur personnel. Le serveur SR peut être indépendant ou être intégré à un autocommutateur privé, de type voix sur protocole Internet.

Le client CL comporte principalement :
- Des éléments ergonomiques SVE génériques, c'est à dire non dédiés à des sous-systèmes de communication particuliers, et permettant à un utilisateur d'accéder à des services courants sur la plupart des sous-systèmes de communication, par exemple :
   -- accéder à un annuaire téléphonique,
   -- demander l'établissement d'une communication téléphonique (à partir d'un annuaire, ou d'un menu contextuel, ou d'un raccourci clavier, etc.),
   -- demander l'envoi d'un message électronique ,
   -- demander l'établissement d'une communication par messagerie instantanée,
   -- demander l'envoi un fichier à un correspondant.
- Des éléments ergonomique EVE génériques permettant à un utilisateur d'être informé d'évènements qui sont signalés par la plupart des sous-systèmes de communication, ces événements concernant une communication ou une session. Par exemple :
   -- une petite musique annonce un appel entrant,
   -- une petite fenêtre surgit et affiche le nom d'un correspondant qui appelle,
   -- une petite fenêtre surgit et indique qu'une demande de mise en conférence a été exécutée, etc....
   -- un graphisme animé montre la progression de l'établissement d'une session.
- Des éléments ergonomique SYE génériques, permettant à un utilisateur accéder à des facilités de service courantes sur la plupart des sous-systèmes de communication. Permettant, par exemple, de :
   -- mettre à jour les logiciels du client et les logiciels du serveur,
   -- découvrir de nouveaux services,
   -- gérer les sessions de l'utilisateur (créer une session, authentifier un utilisateur, maintenir en vigueur une session),
   -- configurer des fonctions de sécurité,
   -- configurer des fonctions de déploiement d'un service,
   -- générer les préférences d'usages associées aux utilisateurs.

Le serveur SR comporte principalement une couche SML de gestion des sessions, et des sous-systèmes de communication SS1, SS2, SS3, permettant respectivement de communiquer via un réseau public, un réseau privé, et Internet, par exemple.

La couche SML de gestion des sessions comporte :
- Un module CO de configuration, communiquant avec les éléments ergonomique SYE génériques permettant à un utilisateur d'accéder à des facilités de service, pour :
   -- gérer les utilisateurs (leurs profiles, leurs droits d'accès, leurs réglages) et accéder aux données des utilisateurs,
   -- gérer la configuration et la maintenance des logiciels constituant le client CL,
   -- et accéder aux fichiers binaires de ces logiciels.
- un module SH de gestion de sessions pour : créer, mettre à jour, transférer, fusionner, ou interrompre des sessions ; gérer les capacités statiques (par exemple : le droit d'établir des sessions de vidéo, de messagerie instantanée ; l'état de renvoi (activé/ non activé) d'un poste , etc....) et les capacités dynamiques (par exemple : la possibilité de passer en mode conférence en fonction de l'état de la session, de réaliser un transfert sur sonnerie, de répondre en mode texte à un appel voix, de raccrocher.....) des terminaux impliqués dans des sessions ; ce module SH ayant une vue d'ensemble des sessions impliquant un utilisateur donné, et communiquant avec l'utilisateur, via les éléments ergonomiques SVE pour permettre à l'utilisateur accéder aux services ;
- Un module ES serveur d'événements, communiquant notamment avec les éléments ergonomique EVE permettant à un utilisateur d'être informé des évènements, pour :
   -- collecter et retransmettre au client CL des événements provenant des sous-systèmes de communication, SS1, SS2, SS3 ;
   -- et gérer des enregistrements et des notifications adressées à d'autres entités (par exemple un serveur d'historique de sessions, une application de taxation, une application de notification d'alarmes en cas de redémarrage d'un sous-système de communication, ...).

Il est à noter que le client CL peut éventuellement comporter en outre des raccourcis vers des applications permettant à certains utilisateurs de bénéficier de fonctions spéciales qui ne sont pas courantes, et qui ne font donc pas partie des éléments ergonomiques génériques prévus dans le client, selon l'invention. Par exemple, un utilisateur peut accéder ainsi à un navigateur web ou à un client de messagerie instantanée ayant des fonctions avancées particulièrement adaptées aux besoins de cet utilisateur.

Le client peut éventuellement comporter en outre des liaisons vers des serveurs d'applications, tels qu'un serveur de présence ou un serveur de localisation, qui collaborent classiquement avec des services de communication.

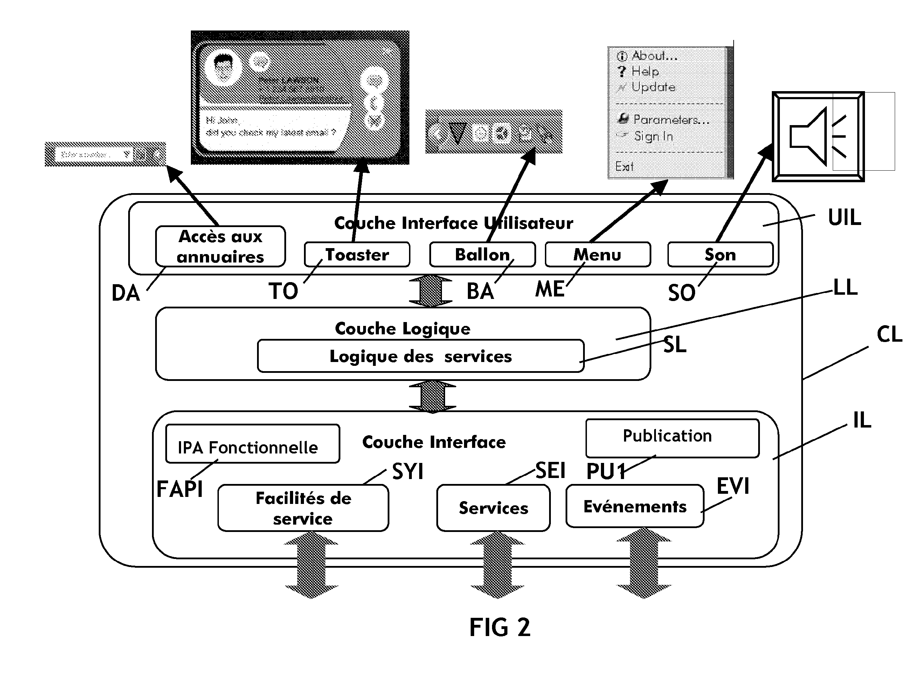

La **figure 2** représente avec plus de détails cet exemple de réalisation CL du client selon l'invention. Il comporte :
- Une couche interface utilisateur UIL, constituée de divers modules logiciels permettant de dialoguer avec un être humain, de manière uniforme quel que soit le sous-système de communication utilisé. Par exemple :
   -- un module DA, pour afficher une liste déroulante constituant un annuaire,
   -- un module TO, pour afficher un toaster, c'est à dire une petite fenêtre qui apparaît en se déplaçant vers le haut comme un toast qui sort d'un toaster, pour signaler un événement,
   -- un module BA, pour afficher un ballon, c'est à dire une icône qui est affichée dans une barre de notification faisant partie d'une fenêtre affichée, et qui affiche un message ou un menu quand le curseur passe dessus, ce menu permettant d'ouvrir une application, pour demander un service par exemple,
   -- un module ME pour afficher un menu,
   -- un module SO pour restituer des sons signalant des événements.
- Une couche logique LL exécutant une logique de service SL en collaboration avec le serveur SR (Par exemple pour : la téléphonie, la vidéo, la messagerie instantanée, la messagerie électronique classique, etc.), et qui communique notamment avec les interfaces de programmation d'application des divers modules de la couche interface utilisateur UIL ;
- Une couche d'interface, IL, communiquant avec la couche logique LL et avec le serveur SR, et comportant :
   -- une interface SYI de facilités de service, permettant de : gérer les mises à jour des logiciels du serveur SR, découvrir de nouveaux services lors de leur création, et de gérer la création de session, l'authentification des utilisateurs, et le maintient des sessions ;
   -- une interface SEI de services, permettant accéder aux services susceptibles d'être fournis par les sous-systèmes SS1, SS2, SS3, en utilisant un modèle de session prédéterminé (en vue d'une unification, par le module SH de gestion de sessions, de toutes les sessions utilisateurs traitées par les différents sous-systèmes SS1, SS2, SS3.) ;
   -- une interface EVI d'événements, permettant de recevoir des informations d'événement transmises par le serveur SR ;
   -- une interface fonctionnelle FAPI de programmation d'application permettrant d'intégrer des nouveaux connecteurs d'accès (de type interface de services SEI), associés à de nouveaux sous-systèmes.
   -- et une interface de publication PU1 permettront à d'autres applications exécutées sur le même terminal de bénéficier des services des sous systèmes SS1,SS2 et SS3, ainsi que des événements en provenance du serveur d'événements, ES, au travers de protocoles standards comme XML/SOAP, DCOM ...

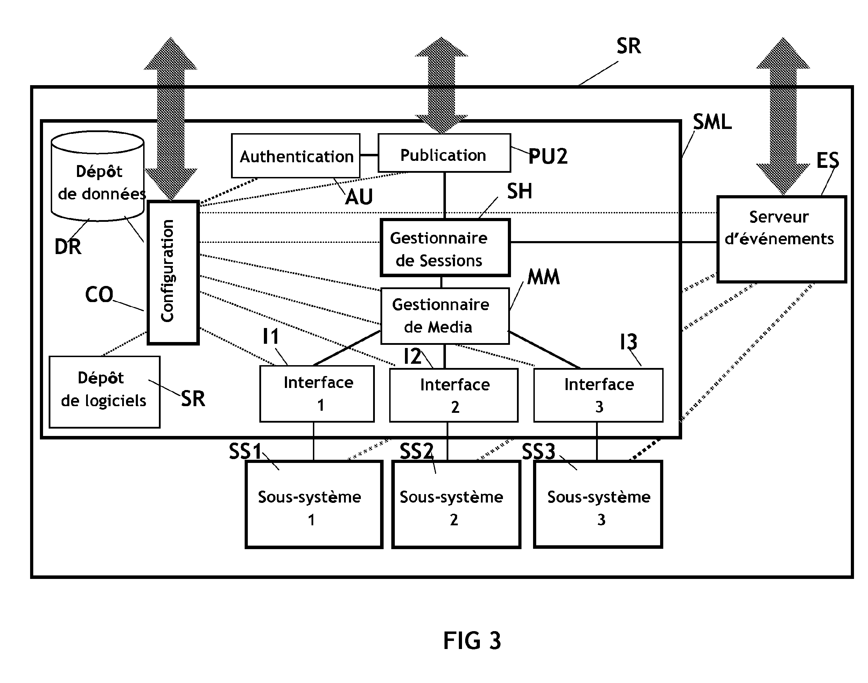

La **figure 3** représente avec plus de détails le serveur SR. Il comporte :
- La couche SML de gestion de sessions, qui comporte :
   -- un module de publication PU2 pour échanger, avec les interface de publication PU1 des clients, tels que le client CL, des informations de gestion des sessions,
   -- un module d'authentification AU qui communique avec le client CL via le module de publication PU2, pour authentifier les utilisateurs, soit en exécutant un logiciel interne au serveur SR, soit en faisant appel à un autre serveur spécialisé dans l'authentification,
   -- Le module SH gestionnaire de sessions (dont les fonctions ont été mentionnées ci-dessus), qui communique avec le client CL via le module de publication PU2, et qui communique avec le serveur d'événements ES,
   -- un module MM gestionnaire de media, qui communique avec le gestionnaire de sessions SH, pour gérer l'attribution et le retrait de media à une session, et pour gérer les capacités statiques et les capacités dynamiques des terminaux impliqués dans les sessions,
   -- et trois interfaces I1, I2, I3 reliant le gestionnaire de media MM respectivement aux trois sous-systèmes de communication SS1, SS2, SS3.
- Le serveur d'événements ES, qui est couplé d'une part aux éléments ergonomique EVE génériques permettant à un utilisateur d'être informé d'évènements, et qui est couplé d'autre part au gestionnaire de sessions SH et aux trois sous-systèmes de communication SS1, SS2, SS3 ; ce serveur d'événements ES centralisant les événements signalés par les trois sous-systèmes de communication SS1, SS2, SS3, et le gestionnaire de sessions SH, puis les retransmettant au client CL ; et gérant les protocoles d'inscription et de notification vers les modules logiciels consommant les événements.
- Le module de configuration CO (dont les fonctions ont été mentionnées ci-dessus), qui est relié :
   -- à un dépôt de données DR, contenant les données concernant les sessions, les utilisateurs, et les événements,
   -- à un dépôt de logiciels SR contenant les logiciels exécutés par le serveur SR (et les licences correspondantes),
   -- et à toutes les autres entités constituant la couche SML de gestion de sessions.

Les interfaces I1, 12, I3 sont spécifiques respectivement pour les sous-systèmes de communication SS1, SS2, SS3. Ces interfaces comportent des moyens d'adaptation pour faire communiquer ces sous-systèmes de communication avec le client CL. Ces interfaces I1, I2, I3 sont des modules logiciels qui sont installés dans le serveur SR lors de la mise en service des sous-systèmes de communication SS1, SS2, SS3 ; et qui peuvent être facilement complétés ou remplacés respectivement chaque fois que le propriétaire du serveur SR ajoute un nouveau sous-système de communication, ou remplace un sous-système par un nouveau. Grâce à cette adaptation, le client CL peut rester inchangé. Donc, quels que soient les sous-systèmes de communication, il n'y a pas besoin de changer ou modifier le logiciel installé sur les terminaux des utilisateurs. Les sous-systèmes de communication sont plus ou moins riches de services et d'indications d'événements, mais le client CL comporte des éléments ergonomiques génériques qui permettent à un utilisateur :
- d'accéder à des services courants sur la plupart des sous-systèmes de communication, donc quel que soit le fabriquant et quel que soit l'âge du sous-système ;
- et d'être informé d'évènements qui sont signalés par la plupart des sous-systèmes de communication, donc quel que soit le fabriquant et quel que soit l'âge du sous-système, ces événements concernant une communication ou une session.

Les moyens d'adaptation pour faire communiquer cette pluralité de sous-systèmes de communication SS1, SS2, SS3, avec un client CL qui n'est pas dédié à des sous-systèmes de communication prédéterminés comportent notamment des interfaces et des protocoles aptes à communiquer avec ces sous systèmes :
- Des convertisseurs de protocole.
- Des connecteurs de communication (communément appelés « sockets ») pour permettre à une application tierce, de pouvoir envoyer des messages au serveur SR et d'activer des services rendu par le serveur SR, par une écriture sur un connecteur ; et permettre, d'autre part, de récupérer des événements remontés par le serveur d'événement EV, par une lecture sur un connecteur.

Leur réalisation est à la portée de l'Homme de l'Art.

## Revendications

1. Client de communication (CL) comportant des moyens (LL, IL) pour communiquer avec un serveur de communication (SR) afin d'utiliser une pluralité de sous-systèmes de communication (SS1, SS2, SS3) couplés à ce serveur, sans que ce client soit dédié à des sous-systèmes de communication prédéterminés ;
**caractérisé en ce qu'**il comporte :
- des éléments ergonomique (SVE) génériques, permettant à un utilisateur d'accéder en temps réel à des services sur plusieurs desdits sous-systèmes de communication,
- et des éléments ergonomique (EVE) génériques, permettant à un utilisateur d'être informé en temps réel d'évènements qui sont signalés par plusieurs des sous-systèmes de communication, ces événements concernant une communication ou une session.

2. Client de communication (CL) selon la revendication 1, **caractérisé en ce qu'**il comporte en outre des éléments ergonomique (SYE) génériques, permettant à un utilisateur accéder à des facilités de service sur plusieurs desdits sous-systèmes de communication.

3. Serveur de communication (SR) comportant des moyens (SML, ES) pour collaborer avec au moins un client (CL) permettant à un utilisateur de ce client :
- d'accéder à des services fournis par une pluralité de sous-systèmes de communication (SS1, SS2, SS3),
- et d'être informé d'évènements qui sont signalés par cette pluralité de sous-systèmes de communication, ces événements concernant une communication ou une session ;
**caractérisé en ce qu'**il comporte en outre une pluralités d'interfaces (I1, I2, I3) spécifiques respectivement pour cette pluralité de sous-systèmes de communication (SS1, SS2, SS3), ces interfaces comportant des moyens d'adaptation pour faire communiquer en temps réel cette pluralité de sous-systèmes de communication avec un client (CL) qui n'est pas dédié à des sous-systèmes de communication prédéterminés.

4. Serveur de communication (SR) selon la revendication 3, **caractérisé en ce que** les moyens d'adaptation, pour faire communiquer cette pluralité de sous-systèmes de communication avec un client (CL) qui n'est pas dédiée à des sous-systèmes de communication prédéterminés, comportent des interfaces et des protocoles aptes à communiquer avec lesdits sous systèmes (SS1, SS2, SS3).

5. Serveur de communication (SR) selon la revendication 3, **caractérisé en ce qu'**il comporte en outre :
- un module (SH) pour gérer des sessions, des capacités de sessions, et des capacités de terminaux impliqués dans des sessions ;
- un module (MM) pour gérer des média impliqués dans une session, et des capacités de terminaux impliqués dans une session ;
- et un module serveur d'événements (ES), pour collecter et retransmettre des événements provenant d'une pluralité de sous-systèmes de communication, et pour gérer des enregistrements et des notifications adressées à d'autres entités.
